# EUROPEAN PATENT APPLICATION

(11) **EP 1 615 099 A2**
(43) Date of publication of application: **11.01.2006**
(21) Application number: 05014527.5
(22) Date of filing: 05.07.2005
(51) Int. Cl.: G06F 1/00

(54) **Information processing system, information processing apparatus, information processing method, recording medium and programm**

(30) Priority: 05.07.2004 JP 2004198604
(71) Applicant: Ricoh Company, Ltd., Tokyo 143-8555 (JP); Ricoh Software Inc., Tokyo 141-0022 (JP); Focus Systems Corporation, Tokyo 141-0022 (JP)
(72) Inventor: Kenichi, Aihara, Kanagawa 242-0001 (JP); Kazuhito, Iizuka, Yokohama-shi, Kanagawa 230-0074 (JP); Takashi, Nihei, Tokyo 104-0054 (JP); Keiichi, Yokoyama, Tokyo 104-0054 (JP); Hiroharu, Yoshikawa, Tokyo 104-0054 (JP); Yuuichi, Kamiya, Shinagawa-ku Tokyo 141-0022 (JP)
(74) Representative: Engelhard, Maximilian

(57) **Abstract**

A CD-R(2) where a key generating program or the like is stored, and a USB memory(4) where a public key(6) is stored are delivered to a supplier(3) from a receiver(1). A common key(7) is generated by the supplier(3). Delivery data which is to be encrypted using the generated common key(7) and a common key(7) which is encrypted using the public key(6) are stored in the CD-R(2) by the supplier(3). The CD-R(2) and the USB memory(4) are delivered to the receiver(1) by the supplier(3). The encrypted common key(7) is decrypted by the receiver(1) using a private key(5). The encrypted delivery data is decrypted by the receiver(1) using the decrypted common key(7).

## Description

The present invention relates to an information processing system, an information processing apparatus, an information processing method, a recording medium and a program which are suitable for secured transmission and reception of confidential electronic files.

Recently, electronic delivery in which an electronic file having documents and/or images filed in an electronic form is stored in a recording medium, such as a magnetic disk, and mailed or delivered to the destination of delivery. When so-called confidential information is to be delivered in such electronic delivery, a security measure to guarantee a high-level confidentiality should be taken.

For instance, a method of enhancing the security in transmitting and receiving an electronic file is disclosed in Unexamined Japanese Patent Application KOKAI Publication No. 2000-123479. According to the method, when a user records an electronic file on an optical disk medium, the unique ID of an optical disk drive unit of an authorized or legitimate user is recorded together with the electronic file. When a user extracts an electronic file recorded on an optical disk medium, on the other hand, the recorded ID is compared with the unique ID of the optical disk drive unit the user is currently using. When both IDs match with each other, a program for extracting the electronic file recorded on the optical disk medium is invoked. Accordingly, the user can prevent illegitimate use of the recording medium even if a third party finds out a password or the like.

However, a user who records an electronic file on a recording medium should make the recording beforehand using an exclusive drive unit and deliver the recording medium. A user who extracts an electronic file from a delivered recording medium should have a dedicated security program installed in a computer beforehand. When a user who wants to extract an electronic file from the delivered recording medium using a plurality of computers, a dedicated security program should be installed in all the computers to be used beforehand. When a user who wants to extract an electronic file using a plurality of computers, located at different sites (e.g., in an office and the destination of a business trip), a dedicated security program should be installed in the computers at the different sites. This enforces users to prepare for desired actions previously, which requires a lot of work and is very troublesome, not to mention the cost required.

Another method of enhancing the security is disclosed in Unexamined Japanese Patent Application KOKAI Publication No. 2003-233949. According to the method, an optical disk medium has a read-only area and a writable area. Data reading from this optical disk medium is allowed only when unique information stored in the read-only area of the optical disk medium is valid.

As the validity is determined based on the unique information stored in the recording medium, however, the security cannot be guaranteed when the unique information is read illegitimately. The security cannot be guaranteed when the user has lost the recording medium itself.

It is apparent that the prior arts are not adequate to secure the confidentiality of an electronic file to be stored in a recording medium by a user.

The present invention has been devised in consideration of the situations, and aims at providing an information processing system, an information processing apparatus, an information processing method, a recording medium and a program which are suitable for secured transmission and reception of confidential electronic files,

To achieve the object, an information processing system according to the first aspect of the invention comprises:
a first information processing apparatus including
   key generation means (52) for generating a set of a private key (5) and a public key (6),
   private-key storage means (55) for storing the private key (5) in a first key recording medium (4),
   public-key storage means (55) for storing the public key (6) in a second key recording medium (4) or a recording medium (2),
   private-key acquisition means (53) for acquiring the private key (5) to be stored in the first key recording medium (4),
   common-key decryption means (54) for decrypting an encrypted common key (8) with the private key (5), and
   electronic-file decryption means (54) for decrypting an encrypted electronic file with the common key (7) decrypted by the common-key decryption means (54); and
a second information processing apparatus including
   common-key generation means (71) for generating a common key (7) for encrypting an electronic file,
   electronic-file encryption means (73) for encrypting the electronic file using the common key (7),
   electronic-file storage means (74) for storing the electronic file, encrypted by the electronic-file encryption means (73), in the recording medium (2),
   public-key acquisition means (72) for acquiring the public key (6) stored in the second key recording medium (4) or the recording medium (2),
   common-key encryption means (73) for encrypting the common key (7) with the public key (6), and
   common-key storage means (72) for storing the common key (8), encrypted by the common-key encryption means (73), in the recording medium (2).

An information processing apparatus according to the second aspect of the invention comprises:
key generation means (52) for generating a set of a private key (5) and a public key (6);
private-key storage means (55) for storing the private key (5) in a first key recording medium (4);
public-key storage means (55) for storing the public key (6) in a second key recording medium (4) or a recording medium (2);
private-key acquisition means (53) for acquiring the private key (5) to be stored in the first key recording medium (4);
common-key decryption means (54) for decrypting an encrypted common key (8) with the private key (5); and
electronic-file decryption means (54) for decrypting an encrypted electronic file with the common key (7) decrypted by the common-key decryption means (54).

The information processing apparatus can further comprise:
an electronic-file information storage section (441) for storing information indicating a confidential level of an electronic file; and
pattern determination means (51) for selecting one procedure from predetermined plural key generating procedures based on information to be stored in the electronic-file information storing section (441), and
wherein the public-key storage means (55) stores the public key (6), generated by the key generation means (52), in the second key recording medium (4) or the recording medium (2) based on the one procedure selected by the pattern determination means (51).

The information processing apparatus can further comprise:
an electronic-file-storer information storage section (442) for storing information on a user who receives the recording medium (2); and
pattern determination means (51) for selecting one procedure from predetermined plural key generating procedures based on information to be stored in the electronic-file-storer information storage section (442), and
wherein the public-key storage means (55) stores the public key, generated by the key generation means (52), in the second key recording medium (4) or the recording medium (2) based on the one procedure selected by the pattern determination means (51).

The electronic-file encryption means (54) can determine from which one of the second key recording medium (4) and the recording medium (2) an encrypted common key (8) is to be acquired, and acquire the encrypted common key (8) from the second key recording medium (4) or the recording medium (2) based on a result of determination.

The key generation means (52) can extract information unique to the recording medium (2), and generate a set of a private key (5) and a public key (6) based on the unique information.

The key generation means (52) can generate a set of a private key (5) and a public key (6) based on information on the user who receives the recording medium (2) or a date.

An information processing apparatus according to the third aspect of the invention comprises:
common-key generation means (71) for generating a common key (7);
electronic-file encryption means (73) for encrypting the electronic file with the common key (7);
electronic-file storage means (74) for storing the electronic file, encrypted by the electronic-file encryption means (73), in a recording medium (2);
public-key acquisition means (72) for acquiring the public key (6) stored in a second key recording medium (4) or the recording medium (2);
common-key encryption means (73) for encrypting a common key (7), which is used in encryption in the electronic-file encryption means (73), with the public key (6); and
common-key storage means (72) for storing the common key (8), encrypted by the common-key encryption means (72), in the recording medium (2).

The information processing apparatus can further comprise:
pattern determination means (75) for determining which procedure in predetermined plural key generating procedures is used, and
wherein the public-key acquisition means (72) acquires a public key (6) according to a predetermined procedure determined by the pattern determination means (75), and
the common-key generation means (71) generates a common key (7) according to the predetermined procedure determined by the pattern determination means (75).

The common-key storage means (72) can determine in which one of the second key recording medium (4) and the recording medium (2) the common key (7) generated by the common-key generation means (71) is to be stored, and store the common key (7) in the second key recording medium (4) or the recording medium (2) based on a result of determination.

The common-key generation means (71) can extract information unique to the recording medium (2), and generate a common key (7) based on the unique information.

An information processing method according to the fourth aspect of the invention comprises:
a key generation step (52) of generating a set of a private key (5) and a public key (6);
a private-key storage step (55) of storing the private key (5) in a first key recording medium (4);
a public-key storage step (55) of storing the public key (6) in a second key recording medium (4) or a recording medium (2);
a private-key acquisition step (53) of acquiring the private key (5) to be stored in the first key recording medium (4);
a common-key decryption step (54) of decrypting an encrypted common key (8) with the private key (5); and
an electronic-file decryption step (54) of decrypting an encrypted electronic file with the common key (7) decrypted at the common-key decryption step (54).

An information processing method according to the fifth aspect of the invention comprises:
a common-key generation step (71) of generating a common key (7);
an electronic-file encryption step (73) of encrypting the electronic file with the common key (7);
an electronic-file storage step (74) of storing the electronic file, encrypted at the electronic-file encryption step (73), in a recording medium (2);
a public-key acquisition step (72) of acquiring the public key (6) stored in a second key recording medium (4) or the recording medium (2);
a common-key encryption step (73) of encrypting a common key (7), which is used in encryption at the electronic-file encryption step (73), with the public key (6); and
a common-key storage step (72) of storing the common key (8), encrypted at the common-key encryption step (72), in the recording medium (2).

A computer readable recording medium according to the sixth aspect of the invention has:
a writable area (22) for storing an electronic file; and
a read-only area (21) where a program for generating a private key (5), a public key (6) and a common key (7) is stored,
the program allowing a computer to function as:
   key generation means (52) for generating a set of a private key (5) and a public key (6);
   private-key storage means (55) for storing the private key (5) in a first key recording medium (4);
   public-key storage means (55) for storing the public key (6) in a second key recording medium (4) or a recording medium (2);
   private-key acquisition means (53) for acquiring the private key (5) to be stored in the first key recording medium (4);
   common-key decryption means (54) for decrypting an encrypted common key (8) with the private key (5) acquired by the private-key acquisition means (53);
   electronic-file decryption means (54) for decrypting an encrypted electronic file with the common key (7) decrypted by the common-key decryption means (54);
   common-key generation means (71) for generating a common key (7);
   electronic-file encryption means (73) for encrypting the electronic file with the common key (7);
   electronic-file storage means (74) for storing the electronic file, encrypted by the electronic-file encryption means (73), in a recording medium (2);
   public-key acquisition means (72) for acquiring the public key (6) stored in a second key recording medium (4) or the recording medium (2);
   common-key encryption means (73) for encrypting a common key (7), which is used in encryption in the electronic-file encryption means (73), with the public key (6) acquired by public-key acquisition means (72); and
   common-key storage means (72) for storing the common key (8), encrypted by the common-key encryption means (72), in the recording medium (2).

A program according to the seventh aspect of the invention allows a computer to function as:
key generation means (52) for generating a set of a private key (5) and a public key (6);
private-key storage means (55) for storing the private key (5) in a first key recording medium (4);
public-key storage means (55) for storing the public key (6) in a second key recording medium (4) or a recording medium (2);
private-key acquisition means (53) for acquiring the private key (5) to be stored in the first key recording medium (4);
common-key decryption means (54) for decrypting an encrypted common key (8) with the private key (5);
electronic-file decryption means (54) for decrypting an encrypted electronic file with the common key (7) decrypted by the common-key decryption means (54);
common-key generation means (71) for generating a common key (7);
electronic-file encryption means (73) for encrypting an electronic file, which should keep confidentiality, with the common key (7);
electronic-file storage means (74) for storing the electronic file, encrypted by the electronic-file encryption means (73), in a recording medium (2);
public-key acquisition means (72) for acquiring the public key (6) stored in a second key recording medium (4) or the recording medium (2);
common-key encryption means (73) for encrypting a common key (7), which is used in encryption in the electronic-file encryption means (73), with the public key (6) acquired by the public-key acquisition means (72); and
common-key storage means (72) for storing the common key (8), encrypted by the common-key encryption means (72), in the recording medium (2).

These objects and other objects and advantages of the present invention will become more apparent upon reading of the following detailed description and the accompanying drawings in which:
FIG. 1 is a diagram showing the configuration of an information processing system according to one embodiment of the invention;
FIG 2 is a diagram showing an example of the structure of a CD-R;
FIG. 3 is a diagram showing an example of the configuration of a receiver PC (Personal computer);
FIG. 4 is a diagram showing an example of information to be contained in delivery data information 441;
FIG 5 is a diagram showing an example of information to be contained in supplier information 442;
FIG. 6 is a diagram showing an example of the functional structures of a PC which is used by a receiver;
FIG. 7 is a diagram showing an example of the configuration of a PC which is used by a supplier;
FIG 8 is a diagram showing an example of the functional structures of a PC which is used by the supplier;
FIG. 9 is a flowchart illustrating a transmission/reception routine;
FIG. 10 is a flowchart illustrating a pattern determination routine;
FIG. 11 is a diagram illustrating an information management routine for a pattern 1;
FIG. 12 is a flowchart illustrating a key generation routine for the pattern 1;
FIG 13 is a flowchart illustrating an encryption routine for the pattern 1;
FIG. 14 is a flowchart illustrating a decryption routine for the pattern 1;
FIG. 15 is a diagram illustrating an information management routine for a pattern 2;
FIG. 16 is a flowchart illustrating a key generation routine for the pattern 2;
FIG. 17 is a diagram illustrating an information management routine for a pattern 3;
FIG 18 is a flowchart illustrating a key generation routine for the pattern 3;
FIG. 19 is a flowchart illustrating an encryption routine for the pattern 3;
FIG 20 is a flowchart illustrating a decryption routine for the pattern 3;
FIG. 21 is a diagram showing an example of the configuration of a PC which is used by a supplier; and

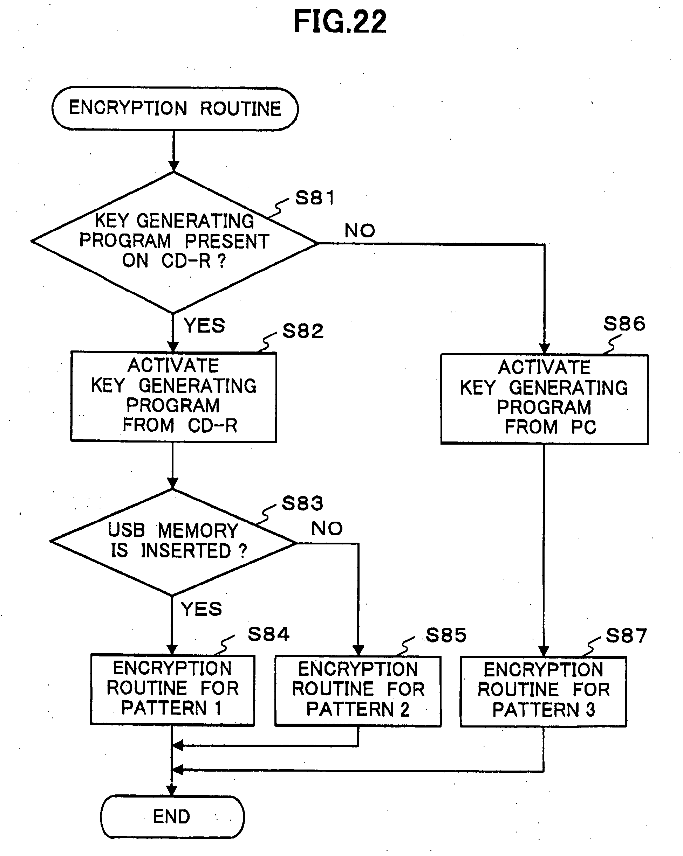

FIG. 22 is a flowchart illustrating procedures for determining a pattern in the encryption routine.

An information processing system, an information processor, a information processing method, a recording medium and a program according to the present invention will now be explained with reference to the accompanying drawings. The following descriptions of embodiments of the present invention will be given of a case of electronic delivery, as an example, where delivery data which should be kept confidential is stored in a recording medium, and mailed or delivered to a delivery destination. The descriptions of embodiments of the present invention will be also given of a case, as an example, where an encryption procedure (the key generation process, encryption process, and decryption process to be discussed later) which depends on the usage pattern of the delivery data is determined, and electronic delivery is carried out in accordance with the determined encryption procedure.

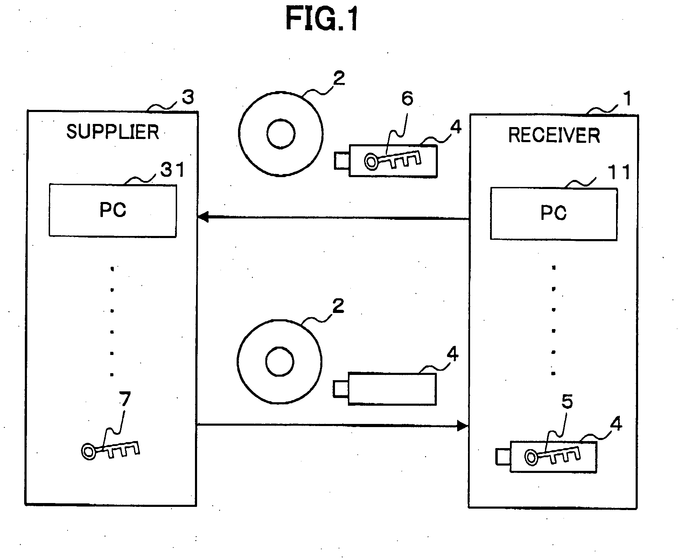

FIG. 1 is a diagram illustrating the embodiment which delivers delivery data using the information processing system of the present invention.

First, a supplier 3 receives a recording medium CD-R (Compact Disc-Rewritable) 2 which stores delivery data, and a USB memory 4 which stores a public key 6, from a receiver 1.

Next, the supplier 3 supplies the receiver 1 with delivery data which is encrypted with a common key 7, and a CD-R 2 which stores a common key 8 encrypted with the public key 6.

The receiver 1 then decrypts the encrypted common key 8 with a private key 5, and the encrypted delivery data with the decrypted common key 7.

That is, the receiver I can receive delivery data from the supplier 3 while keeping the confidentiality of delivery data.

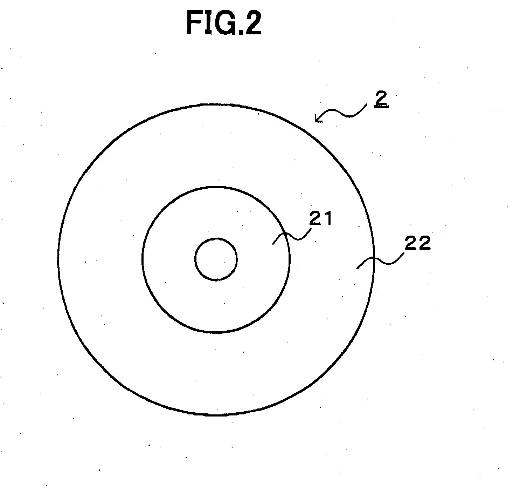

FIG. 2 is a diagram illustrating an example of the structure of the CD-R 2 as the recording medium. As illustrated in FIG. 2, the CD-R 2 has a read-only area (ROM (Read Only Memory) section) 21, and a writable area (RAM (Random Access Memory) section) 22. The ROM section 21 stores a security program such as a key generation program to execute later-described key generation or the like, and a control program to perform control on browsing, referencing, copying of delivery data, and the like. The key generation program is read from the CD-R 2 prior to the reading of the control program. A hybrid type CD-R is available as such a CD-R 2.

The CD-R 2 is used as the recording medium in the embodiment, but other recording media like a DVD-R (Digital Versatile Disk-Recordable) may be used as well.

In the information processing system, the USB (Universal Serial Bus) memory 4, a different recording medium from the CD-R 2, is used together with the CD-R 2. As will be described later, the USB memory 4 stores the private key 5 or the public key 6. The reason why the private key is stored in the USB memory 4, different from the CD-R 2, is to make the content of delivery data (confidential information), stored in the CD-R 2, viewless without the private key 5 or the public key 6, stored in the USB 4, even if the CD-R 2 is lost.

Although the USB memory 4 is used in the embodiment, another flush memory having substantively the same function as that of the USB memory 4 may be used.

In the information processing system of the present invention, as will be described later, the key generation program to be discussed later, the public key 6, and the private key 5 are stored in the CD-R 2 and the USB memory 4, received by the supplier 3 illustrated in FIG. 1. The supplier 3 stores delivery data encrypted with the common key 7 in the received CD-R 2, and encrypts the common key 7 with the public key 6. Accordingly, delivery data encrypted with the common key 7, and the common key 8 encrypted with the public key 6 are stored in the CD-R 2 delivered to the receiver 1. As the receiver 1 decrypts the encrypted common key 8 with the private key 5 stored in the USB memory 4, and decrypts the encrypted delivery data with the decrypted common key 7, the receiver 1 can view the contents of delivery data (confidential information).

As illustrated in FIG. 1, the receiver 1 has a PC 11, etc. The PC 11 can run the program stored in the CD-R 2. The PC 11 can store the private key 5, etc, in the USB memory 4, and can use the stored private key 5 or the like. The PC 11 comprises, for example, an ordinary personal computer.

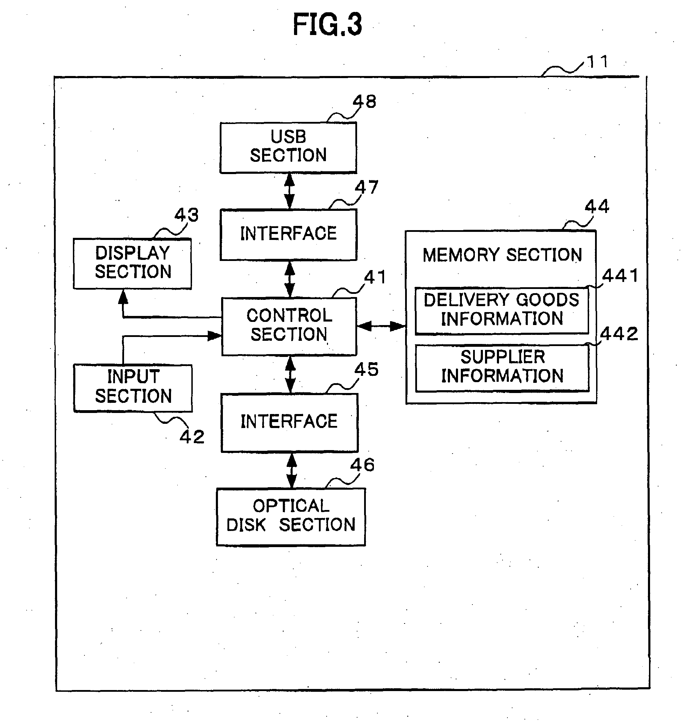

FIG. 3 is a diagram illustrating the configuration of the PC 11 owned by the receiver 1.

As illustrated in FIG. 3, the PC 11 of the receiver 1 includes a control section 41, an input section 42, a display section 43, a memory section 44, interfaces 45 and 47, an optical disk section 46, and a USB section 48.

The control section 41 includes, for instance, a CPU (Central Processing Unit), and controls the entire PC 11. The PC 11 executes various processes by, for instance, running a program stored in the memory section 44. The details of the processes of the control section 41 will be described later.

The input section 42 includes input media, such as a keyboard, a mouse, and a pointing device, and notifies various information inputted by a person in charge of the receiver 1 to the control section 41.

The display section 43 includes a display device, such as a LCD (Liquid Crystal Display), or a PDP (Plasma Display Panel), and displays various information inputted from the control section 41.

The memory section 44 comprises a semiconductor memory, a magnetic disk, or the like, and records various information and programs. The memory section 44 stores delivery data information 441, supplier information 442, etc.

The delivery data information 441 contains confidential information on delivery goods which is delivered by the supplier 3.

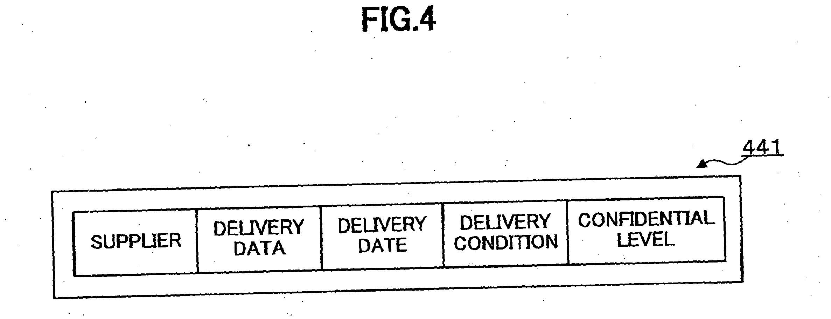

FIG. 4 is a diagram illustrating an example of information contained in the delivery data information 441. As illustrated in this figure, the delivery data information 441 includes the name of the supplier 3, the name of the delivery goods, a delivery date, a delivery condition, and a confidential level. The confidential level is a parameter which represents the degree of the confidentiality.

The supplier information 442 contains information on the supplier 3.

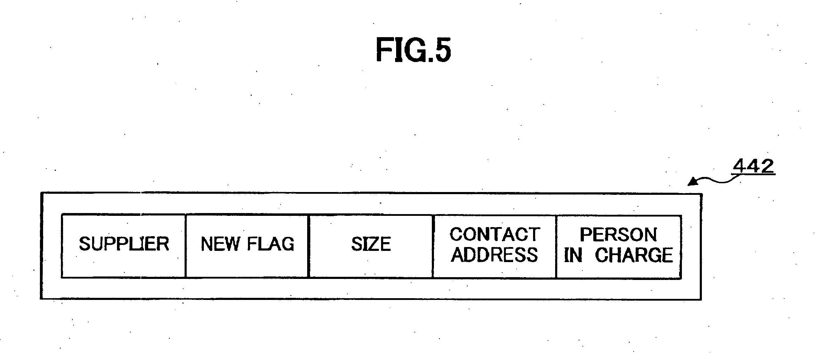

FIG. 5 is a diagram illustrating an example of information contained in the supplier information 442. As illustrated in this figure, the supplier information 442 includes the name of the supplier 3, a new flag (a flag which represents whether or not the supplier is a newly registered one), the size, the contact address and the name of the person in charge of the supplier 3.

The interface 45 is an interactive communication interface with an optical disk drive, and connected to the optical disk section 46. The interface 47 is an interactive communication interface with a USB, and connected to the USB section 48.

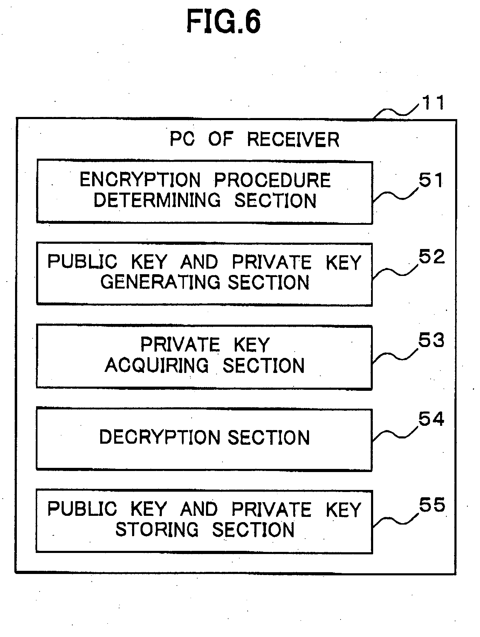

An example of the functional structure of the control section 41 of the PC 11, which is owned by the receiver 1, will be illustrated in FIG. 6. As illustrated in this figure, the PC 11 includes an encryption procedure determining section 51, a public key/private key generating section 52, a private key acquiring section 53, a decryption section 54, and a public key/private key storing section 55.

The encryption procedure determining section 51 comprises the control section 41, etc., and controls the process regarding the determination of the encryption procedure (the procedure for the key generation routine, encryption routine, and decryption routine). To be more precise, the encryption procedure determining section 51 selects a predetermined encryption procedure from encryption procedures of patterns 1 to 3 to be discussed later, based on the delivery data information 441 stored in the memory section 44. For instance, when the key generation programs are installed on the PC 11 of the receiver 1 and a PC 31 of the supplier 3, the encryption procedure determining section 51 determines the pattern 3 as the encryption procedure.

The public key/private key generating section 52 comprises the control section 41, and activates the key generation program stored in the CD-R 2 and generates a set of the private key 5 and the public key 6 in the key generation process to be discussed later.

The private key acquiring section 53 comprises the control section 41, and acquires the private key 5, stored in the USB memory 4, in the decryption process to be discussed later.

The decryption section 54 comprises the control section 41, and, decrypts the encrypted common key 8 with the private key 5 acquired by the private key acquiring section 53, in the later described decryption process. The decryption section 54 decrypts encrypted delivery data with the decrypted common key 7 in the description process to be discussed later.

The public key/private key storing section 55 comprises the control unit 41, etc, and stores the private key 5, generated by the public key/private key generating section 52, in the first USB memory 4 inserted into the USB section 48. The public key/private key storing section 55 also stores the public key 6, generated by the public key/private key generating section 52, in the second USB memory 4 inserted into the USB section 48.

The supplier 3 has the PC 31, etc. The PC 31 is a computer which can activate the program stored in the CD-R 2. The PC 31 stores the encrypted common key 8, etc. in the USB memory 4. The PC 31 takes out the public key 6, etc, stored in the CD-R 2 or the USB memory 4, and executes the later described encryption process or the like. For instance, the PC 31 comprises a general personal computer.

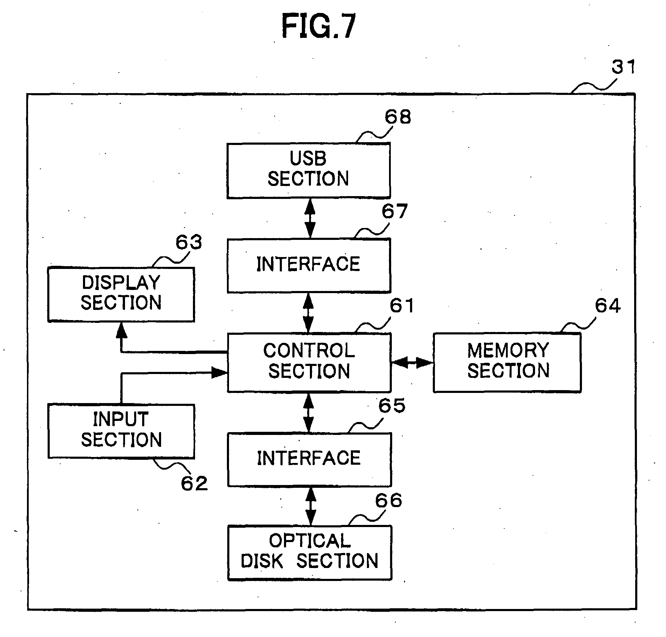

FIG. 7 is a diagram illustrating the configuration of the PC 31 owned by the supplier 3. As illustrated in FIG. 7, the PC 31 includes a control section 61, an input section 62, a display section 63, a memory section 64, interfaces 65, 67, an optical disk section 66, and a USB section 68.

The control section 61 includes, for instance, a CPU, and controls the entire PC 31 of the supplier 3. The PC 31 executes various processes by, for instance, running a program stored in the memory section 64.

The input section 62 includes input media such as a keyboard, a mouse, and a pointing device, and notifies various information inputted by a person in charge of the supplier 3 to the control section 61.

The display section 63 includes a display device, such as a LCD, or a PDP, and displays various information input from the control section 61.

The memory section 64 comprises a semiconductor memory, a magnetic disk, or the like, and records various information and programs.

The interface 65 is an interactive communication interface with an optical disk drive which can perform the reading from and the writing to the CD-R 2, and connected to the optical disk section 66. The interface 67 is an interactive communication interface with a USB, and connected to the USB section 68.

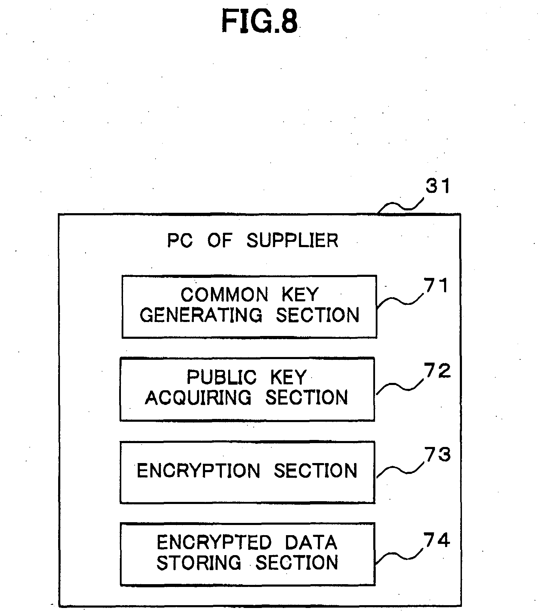

An example of the functional structure of the control section 61 of the PC 31, which is owned by the supplier 3, is illustrated in FIG 8. As illustrated in this figure, the PC 31 includes a common key generating section 71, a public key acquiring section 72, an encryption section 73, and an encrypted data storing section 74.

The common key generating section 71 comprises the control section 61, and generates the common key 7 based on, for instance, information unique to the CD-R 2 (for instance, a product code).

The public key acquiring section 72 comprises the control section 61, etc., and acquires the public key 6 stored in the CD-R2 or the USB memory 4.

The encryption section 73 comprises the control section 61, and, encrypts delivery data with the common key 7, generated by the common key generating section 71. The encryption section 73 encrypts the common key 7 with the public key 6, acquired by the public key acquiring section 72.

The encrypted data storing section 74 comprises the control section 61, etc., and stores the common key 8, encrypted by the encryption section 73, in the RAM section 22 of the CD-R 2 inserted into the optical disk section 66. The encrypted data storing section 74 stores delivery data, encrypted by the encryption section 73, into the RAM section 22 of the CD-R 2 inserted into the optical disk section 66.

Next, the information processing method using the information processing system will be explained. According to the information processing method of the present invention, when the supplier 3 electronically delivers delivery data to the receiver 1, the supplier 3 first receives the CD-R 2 and the USB memory 4, which have undergone the key generation process to be discussed later, from the receiver 1. Next, the supplier 3 executes the encryption process to be discussed later, and delivers the CD-R 2 and the USB memory 4 to the receiver 1. The receiver 1 then decrypts delivery data, stored in the delivered CD-R 2, through the decryption process to be discussed later. The information processing method will be explained in detail below.

In the transmitting and receiving routine according to the information processing method of the present invention, one encryption procedure is selected from a plurality of predetermined encryption procedures. In the embodiment, there are encryption procedures for pattern 1, pattern 2, and pattern 3. The PCs 11 and 31 execute the key generation routine, the encryption routine, and the decryption routine in accordance with the selected encryption procedure.

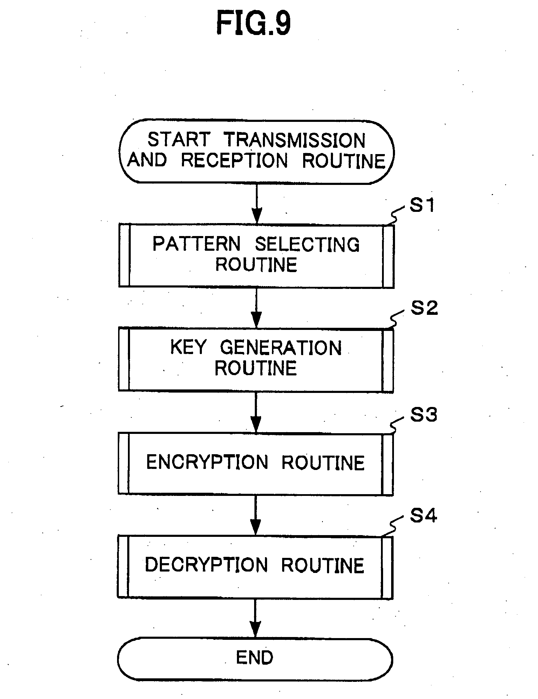

Next, a routine of transmitting and receiving an electronic file with the confidentiality using the information processing system of the present invention will be explained with reference to the flowchart of FIG 9.

First, the encryption procedure determining section 51 which is achieved by the control section 41 selects one of the patterns from the procedures of patterns 1 to 3, based on the delivery data information 441 (step S1).

In the pattern 1, the supplier 3 receives the CD-R 2 which stores the key generation program in the ROM section 21, and the USB memory 4 which stores the public key 6, from the receiver 1. The supplier 3 stores delivery data for which a predetermined encryption process is performed in the RAM section 22 of the CD-R 2.

According to the pattern 1, the first USB memory 4 stores the private key 5, and the second USB memory 4 stores the public key 6. The pattern 1 has the higher confidentiality in comparison with the patterns 2 and 3.

In the pattern 2, the difference from the pattern 1 is that the public key 6 is stored in the RAM section 22 of the CD-R 2. The user's processing operation is easier than that of the pattern 1.

In the pattern 3, the ROM section 21 of the CD-R 2 does not store the key generation program. In this case, the key generation program is installed in the PC 11 of the receiver 1 and the PC 31 of the supplier 3.

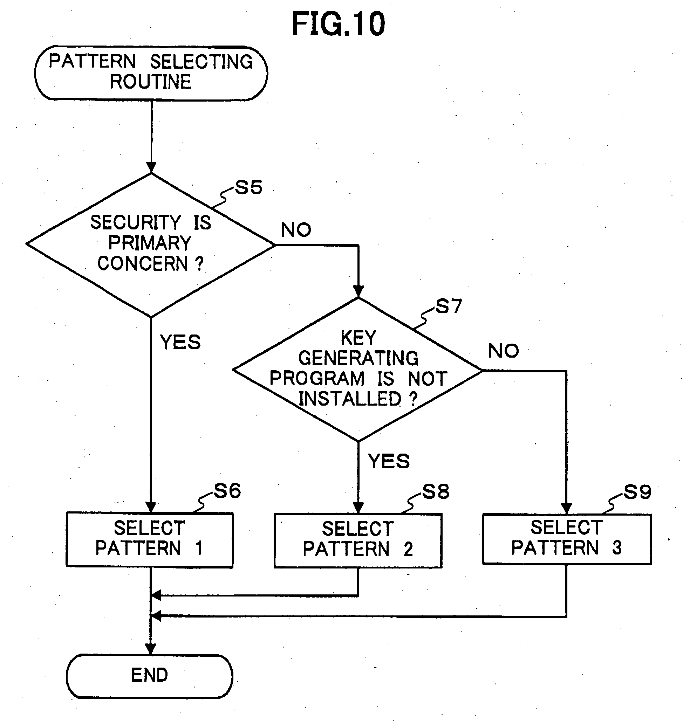

FIG 10 is a flowchart for explaining the pattern selecting process in the step S1.

First, the control section 41 determines whether or not the security is the primary concern (step S5), In the embodiment, the control section 41 performs the determination based on the confidential level contained in the delivery data information 441.

In a case where the security is the primary concern (step S5; YES), the control section 41 selects the pattern 1 (step S6). For instance, two stage levels regarding the confidential level are set beforehand by the person of the receiver 1 in charge. If a high confidential level is set, the control section 41 selects the pattern 1.

In a case where the user-friendliness for the process of the user is emphasized in addition to the security (step S5; NO), the control section 41 determines whether or not the key generation program is installed on both of the PC 11 of the receiver 1 and the PC 31 of the supplier 3. In the embodiment, the control section 41 performs the determination based on the new flag contained in supplier information 442. For instance, two kinds of information for the new flag are set beforehand by the person in charge of the receiver 1.

In a case where information indicating that the key generation program has not yet been installed on the PC 31 used by the supplier 3 is set in the new flag (step S7; YES), the control section 41 selects the pattern 2. In contrast, in a case where information indicating the installation of the key generation program on the PC 31 used by the supplier 3 is set in the new flag (step S7; NO), the control section 41 selects the pattern 3.

When the patterns of the encryption procedure are selected, the public key/private key generating section 52 achieved by the control section 41 executes the key generation process of the selected pattern (step S2). The key generation process will be described later.

When the key generation process is executed, the CD-R 2 and the USB memory 4 for which the key generation process is performed are sent to the supplier 3 from the receiver 1. The person in charge of the supplier 3 received the CD-R 2 and the USB memory 4 for which the key generation process is performed. The control section 61 of the PC 31 of the supplier 3 executes the encryption process of the selected pattern for the confidential electronic file (step S3). The encrypted electronic file is stored in the RAM section 22 of the CD-R 2. The details of the encryption process will be explained later.

When the encryption process is executed, the CD-R 2 and the USB memory 4 which have undergone the encryption process are sent to the receiver 1 from the supplier 3.

The person in charge of the receiver 1 receives the CD-R 2 and the USB memory 4 which have undergone the encryption process. The control section 41 of the PC 11 of the receiver 1 executes the decryption process of the selected pattern (step S4). The details of the decryption process will be explained later.

Accordingly, the person in charge of the receiver 1 can safely receives confidential delivery data.

Next, the key generation routine, the encryption routine, and the decryption routine for the each determined pattern will now be explained.

### <Pattern 1>

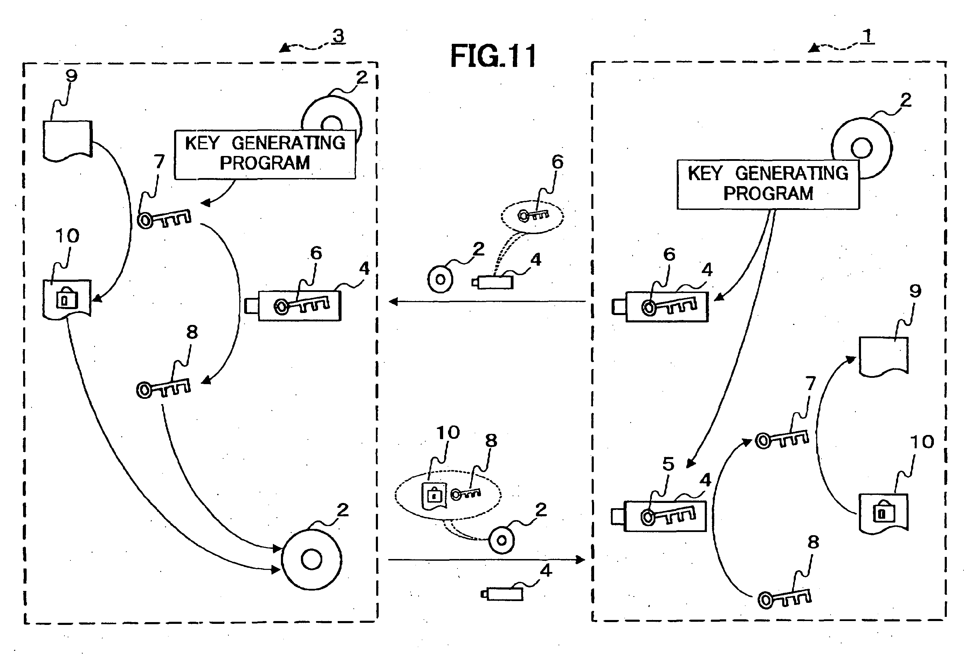

FIG. 11 is a diagram illustrating the outline of the key generation routine, encryption routine, and decryption routine for the pattern 1.

In the pattern 1, the PC 11 of the receiver 1 generates the private key 5 and the public key 6 by the key generation process to be discussed later. The PC 11 of the receiver 1 stores the private key 5 in the first USB memory 4, and also stores the public key 6 in the second USB memory 4. The second USB memory 4 and the CD-R 2 for storing delivery data to be delivered are sent to the supplier 3.

In the pattern 1; the key generation program is stored in the ROM section 21 of the CD-R 2 to be sent. As mentioned above, the ROM section 21 of the CD-R 2 stores the program which executes the reference, the copying, etc. of delivery data.

Next, the PC 31 of the supplier 3 generates the common key 7 with the public key 6 by the key generation program. The PC 31 of the supplier 3 encrypts the electronic file 9 with the common key 7 through the encryption routine to be discussed later, thereby generating the encrypted electronic file 10. The PC 31 of the supplier 3 encrypts the common key 7 with the public key 6, thereby generating the encrypted common key 8, The supplier 3 saves the encrypted electronic file 10 and the encrypted common key 8 in the CD-R 2 and sends the CD-R 2 to the receiver 1.

The PC 11 of the receiver 1 decrypts the encrypted common key 8 with the private key 5, by the decryption routine to be discussed later, thereby generating the decrypted common key 7. The PC 11 of the receiver 1 decrypts the encrypted electronic file 10 with the common key 7, thereby obtaining the decrypted electronic file 9.

Next, the details of the key generation routine, encryption routine, and decryption routine for the pattern 1 will now be explained.

### (Key Generation Routine)

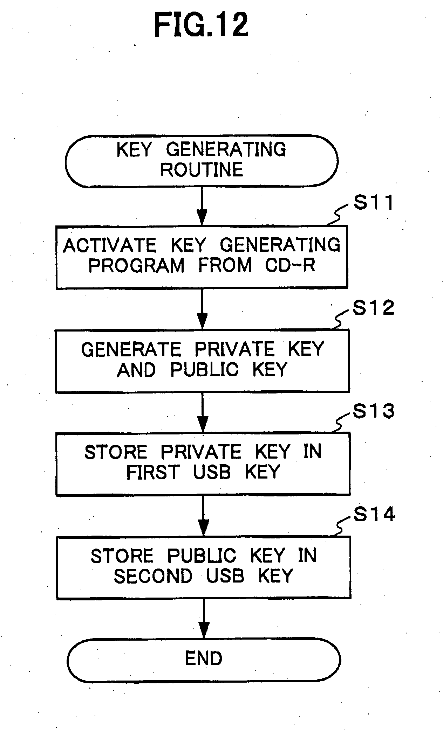

The key generation routine is a process which generates the set of the private key 5 and the public key 6, and stores the generated private key 5 and public key 6 in the USB memories 4. The key generation routine for the pattern 1 will now be explained with reference to the flowchart of FIG. 12.

When the CD-R 2 is inserted into the optical disk section 46 of the PC 11 by the person in charge of the receiver 1, the control section 41 of the PC 11 activates the key generation program stored in the CD-R 2 (step S11).

When the key generation program is activated, the public key/private key generating section 52 generates the set of private key 5 and the public key 6 in accordance with the key generation program (step S12). The generated keys may be used only for the current delivery, or may be used within the term of validity determined by the receiver 1 beforehand.

The public key/private key generating section 52 generates the set of the private key 5 and the public key 6 based on unique information (for instance, the serial number) of the CD-R 2 which is inserted into the optical disk section 46. When a different CD-R 2 is inserted into the optical disk section 46, therefore, a different set of the private key 5 and the public key 6 is to be generated by the public key/ private key generating section 52.

The public key/private key generating section 52 can generate the set of the private key 5 and the public key 6 with information which contains the name of the person carrying out the key generation routine, date, etc. Accordingly, the security can be further enhanced.

When the private key 5 and the public key 6 are generated, the public key/private key storing section 55 requests the person in charge of the receiver 1 to insert the first USB memory 4 into the USB section 48 of the PC 11. When the first USB memory 4 is inserted into the USB section 48, the public key/private key storing section 55 stores the private key 5 in the first USB memory 4 (step S13).

Next, the public key/private key storing section 55 requests the person in charge of the receiver 1 to insert the second USB memory 4 into the USB section 48. When the second USB memory 4 is inserted into the USB section 48, the public key/private key storing section 55 stores the public key 6 in the second USB memory 4 (step S14), and terminates this routine.

While the public key/private key storing section 55 stores the private key 5 in the first USB memory 4 in the embodiment, it may store the private key 5 in a recording device included in the memory section 44 of the PC 11. That is, the location where the private key 5 is stored is not limited to the recording medium such as a removable disk, but may be a recording device such as a hard disk built in a computer.

### (Encryption Routine)

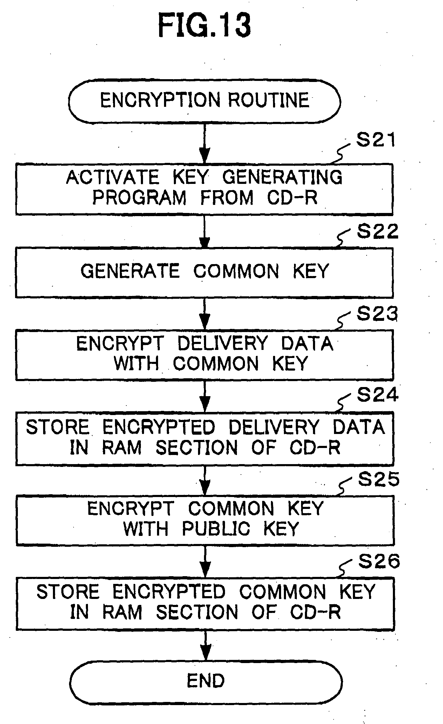

The encryption routine is a process which generates the common key 7, and, encrypts delivery data with the common key 7 and encrypts the common key 7 used for the encryption of delivery data, with the public key 6. The encryption routine for the pattern 1 will now be explained with reference to the flowchart of FIG. 13.

When the CD-R 2 is inserted into the optical disk section 66 of the PC 31 by the person in charge of the supplier 3, the control section 61 of the PC 31 activates the key generation program stored in the CD-R 2 (step S21).

When the key generation program is activated, the common key generating section 71 generates the common key 7 in accordance with the key generation program (step S22),

The common key generating section 71 generates the common key 7 based on unique information of the CD-R2 which is inserted into the optical disk section 66 (for instance, serial number). When a different CD-R 2 is inserted into the optical disk section 66, therefore, a different common key 7 is generated by the common key generating section 71.

When the common key 7 is generated, the encryption section 73 encrypts delivery data with the generated common key 7 (step S23).

When delivery data is encrypted, the control section 61 stores encrypted delivery data in the RAM section 22 of the CD-R 2 (step S24).

The public key acquiring section 72 requests the person in charge of the supplier 3 to insert the second USB memory 4 into the USB section 68 of the PC 31. When the second USB memory 4 is inserted into the USB section 68, the public key acquiring section 72 acquires the public key 6 stored in the second USB memory 4. When the public key 72 acquires the public key 6, the encryption section 73 encrypts the common key 7, which is used for the encryption of delivery data, with the acquired public key 6 (step S25).

When the common key 7 is encrypted, the encrypted data storing section 74 stores the encrypted common key 8 in the RAM section 22 of the CD-R 2 (step S26), and terminated this routine.

### (Decryption Routine)

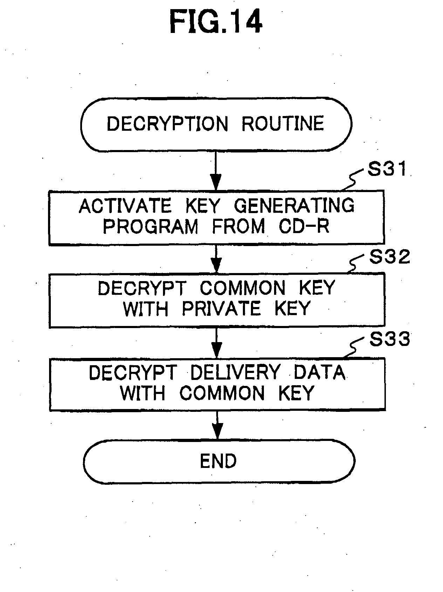

The decryption routine is a process which decrypts the common key 8 encrypted by the private key 5, and decrypts delivery data with the decrypted common key 7. The decryption routine of the pattern 1 will now be explained with reference to the flowchart of FIG. 14.

When the CD-R 2 is inserted into the optical disk section 46 of the PC 11 by the person in charge of the receiver 1, the control section 41 of the PC 11 activates the key generation program stored in the CD-R 2 (step S31).

The private key acquiring section 53 requests the person in charge of the receiver 1 to insert the first USB memory 4 into the USB section 48 of the PC 11. When the first USB memory 4 is inserted into the USB section 48, the private key acquiring section 53 acquires the private key 5 stored in the first USB memory 4.

When the private key acquiring section 53 acquires the private key 5, the decryption section 54 decrypts the encrypted common key 8, stored in the RAM section 22 of the CD-R 2, with the acquired private key 5 (step S32).

Subsequently, the decryption section 54 decrypts encrypted delivery data, stored in the RAM section 22 of the CD-R 2, with the decrypted common key 7 (step S33), and finishes the process.

As mentioned above, according to the pattern 1, the key generation program is stored in the ROM section 21 of the CD-R 2 which is to be distributed. Accordingly, the installation of the security program, such as the key generation program, on the PC 11 or the PC 31 is not required.

When confidential encrypted delivery data is referred to at different locations, the contents of delivery data can be seen without installing the decryption program to all of the PCs 11 at plural different locations. This can ensure the secured management and storage of delivery data over a long term using the CD-R 2 as the recording medium.

Because the private key 5 is stored in the USB memory 4, different from the CD-R 2, the contents of delivery data (confidential information) stored in the CD-R 2 can be seen without the private key 5 in the USB memory 4 even if the CD-R 2 is lost. Accordingly, the security-based confidentiality can be enhanced.

The high confidentiality can be ensured by decrypting the common key 7 with the public key 6 and strictly administrating the private key 5,

Although the control section 61 of the PC 31 of the supplier 3 stores the encrypted common key 8 in the RAM section 22 of the CD-R 2 in the embodiment, it may store that key 8 in the second USB memory 4.

In this case, in the step S26 of the encryption routine executed by the PC 31, the encrypted data storing section 74 determines whether or not the second USB memory 4 is inserted into the USB section 68. In a case where the second USB memory 4 is inserted into the USB section 68, the control section 61 stores the encrypted common key 8 in the second USB memory 4.

At the step S32 of the decryption process executed by the PC 11, the decryption section 54 determines whether or not the second USB memory 4 is inserted into the USB section 48. In a case where the second USB memory 4 is inserted into the USB section 48, the control section 41 decrypts the encrypted common key 8 stored in the second USB memory 4.

### <Pattern 2>

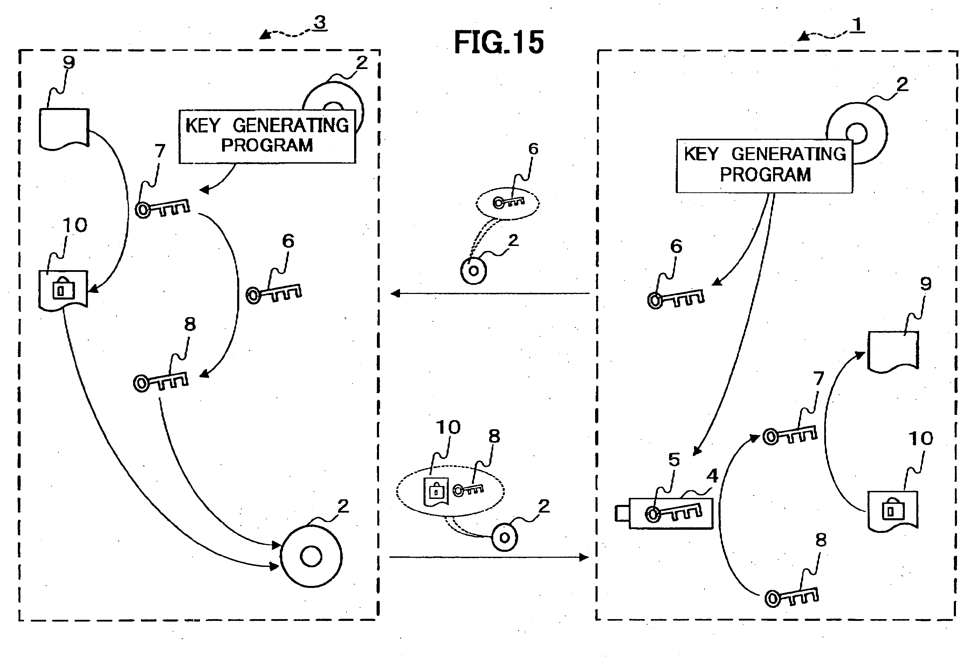

Next, the key generation routine, encryption routine, and decryption routine for the pattern 2 will now be explained. FIG 15 is a diagram illustrating the key generation, encryption, and decryption routines for the pattern 2. The pattern 2 differs from the pattern 1 in that the public key is stored in the RAM section 22 of the CD-R 2.

### (Key Generation Routine)

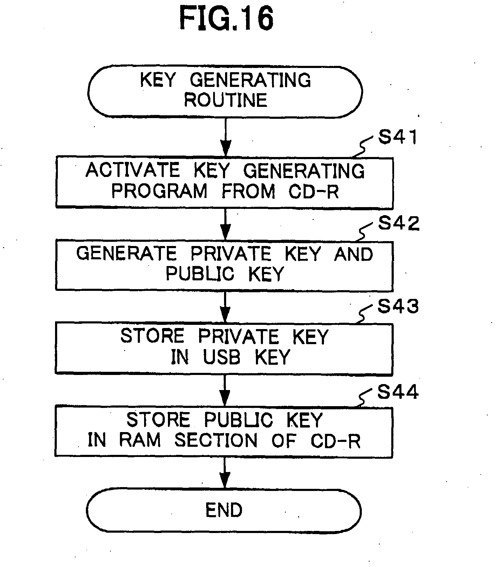

The key generation routine for the pattern 2 will now be explained with reference to the flowchart of FIG 16.

When the CD-R 2 is inserted into the optical disk section 46 of the PC 11 by the person in charge of the receiver 1, the control section 41 of the PC 11 activates the key generation program stored in the CD-R 2 (step S41).

When the key generation program is activated, the public key/private key generating section 52 generates the set of private key 5 and the public key 6 in accordance with the key generation program (step S42).

The public key/private key generating section 52 generates the set of the private key 5 and the public key 6 based on unique information (for instance, the serial number) of the CD-R 2 which is inserted into the optical disk section 46. When a different CD-R 2 is inserted into the optical disk section 46, therefore, a different set of the private key 5 and the public key 6 is generated by the public key/ private key generating section 52.

When the private key 5 and the public key 6 are generated, the public key/private key storing section 55 requests the person in charge of the receiver 1 to insert the USB memory 4 into the USB section 48 of the PC 11. When the USB memory 4 is inserted into the USB section 48, the public key/private key storing section 55 stores the private key 5 in the USB memory 4 (step S43).

Next, the public key/private key storing section 55 stores the public key 6 in the RAM section 22 of the CD-R 2 (step S44), and terminates this routine.

### (Encryption Routine)

The encryption routine for the pattern 2 is basically same as that for the pattern 1, except the procedure for acquiring the public key 6. Therefore, the encryption routine for the pattern 2 will be explained with reference to the flowchart of FIG 13 which is used in the description of the encryption routine for the pattern 1.

When the CD-R 2 is inserted into the optical disk section 66 of the PC 31 by the person in charge of the supplier 3, the control section 61 activates the key generation program stored in the CD-R 2 (step S21),

When the key generation program is activated, the common key generating section 71 generates the common key 7 in accordance with the key generation program (step S22).

When the common key 7 is generated, the encryption section 73 encrypts delivery data with the generated common key 7 (step S23).

When delivery data is encrypted, the control section 61 stores encrypted delivery data in the RAM section 22 of the CD-R 2 (step S24).

The public key acquiring section 72 acquires the public key 6 stored in the second USB memory 4. When the public key 72 acquires the public key 6, the encryption section 73 encrypts the common key 7, which is used for the encryption of delivery data, with the acquired public key 6 (step S25).

When the common key 7 is encrypted, the encrypted data storing section 74 stores the encrypted common key 8 in the RAM section 22 of the CD-R 2 (step S26), and terminates this routine.

### (Decryption Routine)

The decryption routine for the pattern 2 is same as that for the pattern 1. Accordingly, the decryption routine for the pattern 2 will be discussed referring to the flowchart of FIG. 14 which is used in the description of the decryption routine for the pattern 1.

When the CD-R 2 is inserted into the optical disk section 46 of the PC 11 by the person in charge of the receiver 1, the control section 41 of the PC 11 activates the key generation program stored in the CD-R 2 (step S31).
The private key acquiring section 53 requests the person in charge of the receiver 1 to insert the USB memory 4 into the USB section 48 of the PC 11. When the USB memory 4 is inserted into the USB section 48, the private key acquiring section 53 acquires the private key 5 stored in the USB memory 4.

When the private key acquiring section 53 acquires the private key 5, the decryption section 54 decrypts the encrypted common key 8, stored in the RAM section 22 of the CD-R 2, with the acquired private key 5 (step S32).

Subsequently, the decryption section 54 decrypts encrypted delivery data, stored in the RAM section 22 of the CD-R 2, with the decrypted common key 7 (step S33), and terminates this routine.

As mentioned above, according to the pattern 2, because the public key 6 is stored in the RAM section 22 of the CD-R 2, the USB memory 4 is not required to store the public key 6. That is, the operations of the key generation routine and the encryption routine become easier.

### <Pattern 3>

Next, the key generation routine, encryption routine, and decryption routine for the pattern 3 will now be described.

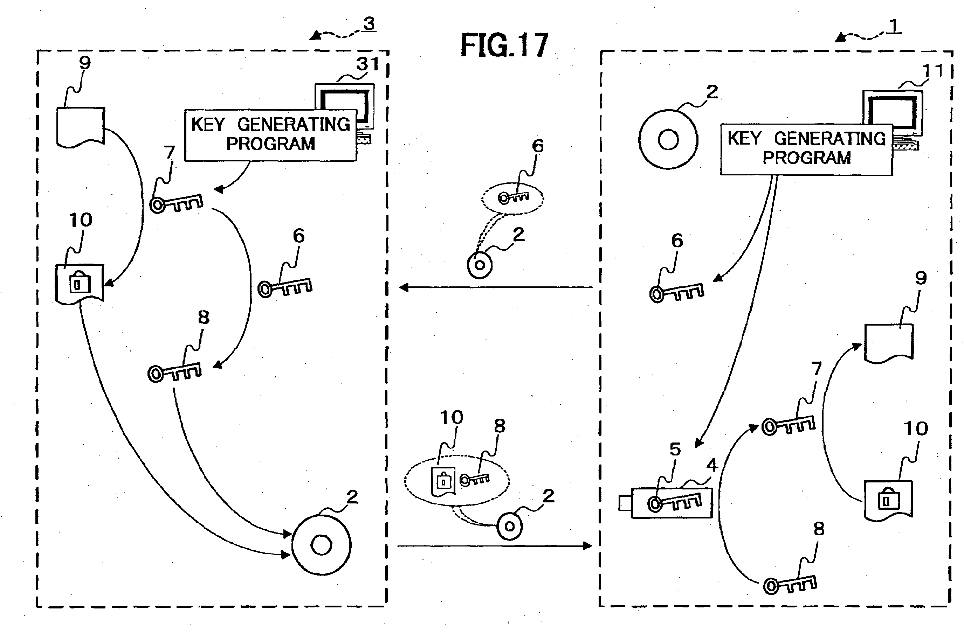

FIG. 17 is a diagram illustrating the key generation, encryption, and decryption processes of the pattern 3.

The pattern 3 differs from the pattern 2 in that the key generation program is not stored in the ROM section 21 of the CD-R 2.

### (Key Generation Routine)

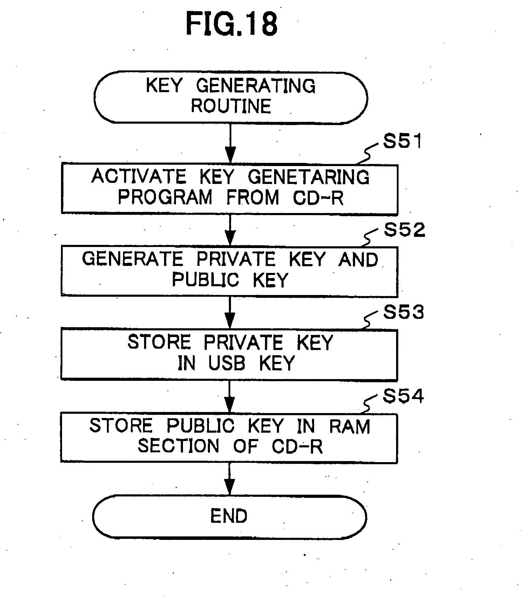

The key generation routine of the pattern 3 will now be discussed referring to the flowchart of FIG 18.

When the instruction to activate the key generation program, preinstalled on the PC 11, is entered through the input section 42 by the person in charge of the receiver 1, the control section 41 of the PC 11 activates the key generation program (step S51).

When the key generation program is activated, the public key/private key generating section 52 generates the set of private key 5 and the public key 6 in accordance with the key generation program (step S52).

The public key/private key generating section 52 generates the set of the private key 5 and the public key 6 based on unique information (for instance, the serial number) of the CD-R 2 which is inserted into the optical disk section 46. When a different CD-R 2 is inserted into the optical disk section 46, therefore, a different set of the private key 5 and the public key 6 is generated by the public key/ private key generating section 52.

When the private key 5 and the public key 6 are generated, the public key/private key storing section 55 requests the person in charge of the receiver 1 to insert the USB memory 4 into the USB section 48 of the PC 11. When the USB memory 4 is inserted into the USB section 48, the public key/private key storing section 55 stores the private key 5 in the USB memory 4 (step S53).

Next, the public key/private key storing section 55 stores the public key 6 in the RAM section 22 of the CD-R 2 (step S54), and terminates this routine.

### (Encryption Routine)

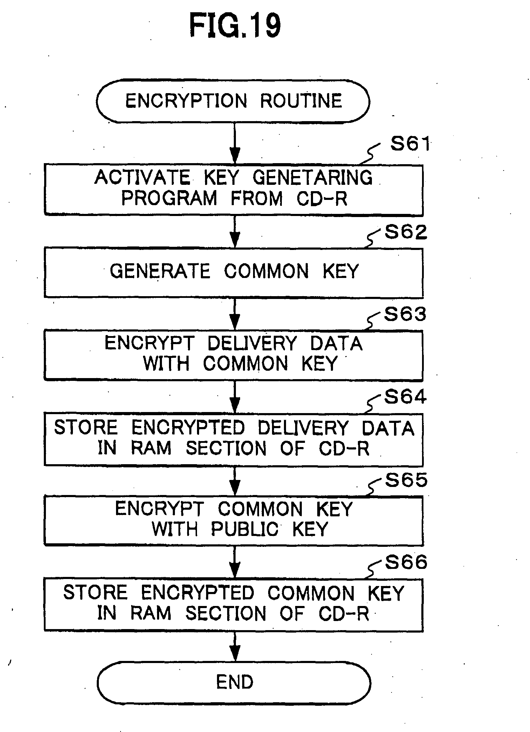

The encryption routine for the pattern 3 will now be described with reference to the flowchart of FIG 19.

When the instruction to activate the key generation program, preinstalled on the PC 31, is entered through the input section 62 by the person in charge of the supplier 3, the control section 61 activates the key generation program (step S61).

When the key generation program is activated, the common key generating section 71 generates the common key 7 in accordance with the key generation program (step S62).

The common key generating section 71 generates the common key 7 based on unique information (for instance, the serial number) of the CD-R 2 which is inserted into the optical disk section 66. When a different CD-R 2 is inserted into the optical disk section 66, therefore, a different common key 7 is generated by the common key generating section 71.

When the common key 7 is generated, the encryption section 73 encrypts delivery data with the generated common key 7 (step S63).

When delivery data is encrypted, the control section 61 stores encrypted delivery data in the RAM section 22 of the CD-R 2 (step S64).

The public key acquiring section 72 acquires the public key 6 stored in the RAM section 22 of the CD-R 2. When the public key 72 acquires the public key 6, the encryption section 73 encrypts the common key 7, which is used to encrypt delivery data with the acquired public key 6 (step S65).

When the common key 7 is encrypted, the encrypted data storing section 74 stores the encrypted common key 8 in the RAM section 22 of the CD-R 2 (step S66), and terminates this routine.

### (Decryption Routine)

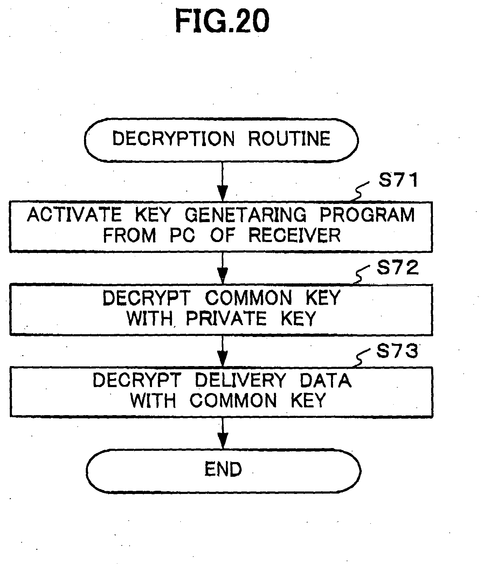

The decryption routine for the pattern 3 will now be described with reference to the flowchart of FIG. 20.

When the instruction to activate the key generation program, preinstalled on the PC 11, is entered through the input section 42 by the person in charge of the receiver 1, the control section 41 of the PC 11 activates the key generation program 1 (step S71).

The private key acquiring section 53 requests the person in charge of the receiver 1 to insert the USB memory 4 into the USB section 48 of the PC 11. When the USB memory 4 is inserted into the USB section 48, the private key acquiring section 53 acquires the private key 5 stored in the USB memory 4.

When the private key acquiring section 53 acquires the private key 5, the decryption section 54 decrypts the encrypted common key 8, stored in the RAM section 22 of the CD-R 2, with the acquired private key 5 (step S72).

Subsequently, the decryption section 54 decrypts encrypted delivery data, stored in the RAM section 22 of the CD-R 2, with the decrypted common key 7 (step S33), and terminates this routine.

In a case where the PC 11 used by the receiver 1 and the PC 31 used by the supplier 3 store the key generation program as described, it is unnecessary to store the key generation program in the ROM section 21 of the CD-R 2. Accordingly, the pattern 3 is useful in this case.

As described above, according to the embodiment of the present invention, the key generation program can be stored in the ROM section 21 of the CD-R 2. Therefore, the dedicated security program need not be installed on the PC 11 used by the receiver 1 and the PC 33 used by the supplier 3.

The present invention is not limited to the above-described embodiment, and can be modified and adapted in various forms. Although the foregoing description of the embodiment of the present invention has been given, as an example, of a case where the encryption procedure determining section 51 selects one of the patterns from the pattern 1 to 3, there may be only one pattern to avoid execution of the process of selecting the pattern. The number of patterns is not limited to three, and may be two, or four or greater.

The foregoing description of the embodiment of the present invention has been given, as an example, of a case where the optimal pattern is selected based on delivery data information 441 stored in the memory section 44. The present invention, however, is not limited to that particular case, and the optimal pattern may be selected based on an arbitrary criterion.

Another embodiment to which the first embodiment has been adapted will be discussed below. According to the second embodiment, the supplier 3 automatically determines which one of predetermined encryption procedures (i.e., one of the patterns 1 to 3). Because the configurations of the PC 11 of the receiver 1 and the configurations of the PC 31 of the supplier 3 are substantially identical to those of the first embodiment, their descriptions will be omitted.

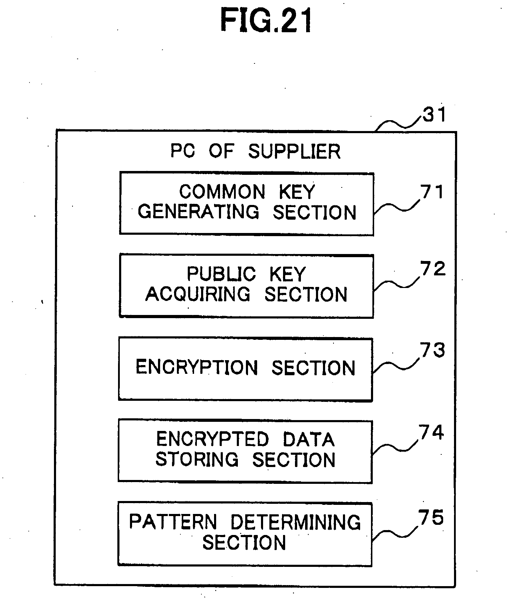

The control section 61 of the PC 31 of the supplier 3 according to the embodiment further comprises a pattern determining section 75 as shown in FIG. 21.

The pattern determining section 75, which comprises the control section 61, etc., determines whether the key generation program is stored in the recording medium 2 inserted in the optical disk section 66 or not. Based on the determination result, the pattern determining section 75 determines which one of the patterns 1 to 3 is to be selected, Further, the pattern determining section 75 input the determination result to the public key acquiring section 72, and acquires a public key 6 from the USB memory 4 or the recording medium 2.

### (Key Generation Routine)

The encryption procedure determining section 51 of the PC 11 of the receiver 1 selects a pattern for the key generation routine according to the above-described pattern selecting routine. Then, the public key/private key generating section 52 generates a set of the private key 5 and the public key 6 according to the key generation routine for the pattern selected by the encryption procedure determining section 51. As the key generation routine for each pattern is the same as the one discussed above, its description will be omitted.

### (Encryption Routine)

The encryption routine according to the embodiment will be discussed referring to the flowchart in FIG. 21.

When the CD-R 2 is inserted into the optical disk section 66 by a person in charge of the supplier 3, the control section 61 of the PC 31 of the supplier 3 activates the key generation program when this program is on the CD-R 2 (step S81; YES) (step S82).

When the key generation program is not on the CD-R 2 (step S81; NO), on the other hand, the control section 61 activates the key generation program prestored in the memory section 64 of the PC 31 (step S86). In this case, the pattern determining section 75 determines that the encryption routine selected by the receiver 1 is the pattern 3. Then, the control section 61 executes the key generation program for the pattern 3.

As the control section 61 activates the key generation program at step S82, the pattern determining section 75 determines whether the second USB memory 4 is inserted in the USB section 68 or not (step S83).

When the second USB memory 4 is inserted in the USB section 68 (step S83; YES), the pattern determining section 75 determines that the encryption routine selected by the receiver 1 is the pattern 1, Then, the control section 61 executes the encryption routine for the pattern 1 (step S84). When the second USB memory 4 is not inserted in the USB section 68 (step S83; NO), the pattern determining section 75 determines that the encryption routine selected by the receiver 1 is the pattern 2. Then, the control section 61 executes the encryption routine for the pattern 2 (step S85).

As the key generation routine for each pattern is the same as the one discussed above, its description will be omitted.

### (Decryption Routine)

The decryption routine according to the embodiment is the same as the decryption routine for each pattern according to the first embodiment, its description will be omitted.

According to the embodiment, as apparent from the above, the supplier 3 can automatically recognize the pattern for a predetermined encryption routine selected by the receiver 1.

As described above, the present invention can provide an information processing system, an information processing apparatus, an information processing method, a recording medium and a program which are suitable for secured transmission and reception of confidential electronic files.

Various embodiments and changes may be made thereunto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

## Claims

1. An information processing system **characterized by** comprising:
a first information processing apparatus including
key generation means (52) for generating a set of a private key (5) and a public key (6),
private-key storage means (55) for storing said private key (5) in a first key recording medium (4),
public-key storage means (55) for storing said public key (6) in a second key recording medium (4) or a recording medium (2),
private-key acquisition means (53) for acquiring said private key (5) to be stored in said first key recording medium (4),
common-key decryption means (54) for decrypting an encrypted common key (8) with said private key (5), and
electronic-file decryption means (54) for decrypting an encrypted electronic file with said decrypted common key (7); and
a second information processing apparatus including
common-key generation means (71) for generating a common key (7) for encrypting an electronic file,
electronic-file encryption means (73) for encrypting said electronic file using said common key (7),
electronic-file storage means (74) for storing said electronic file, encrypted by said electronic-file encryption means (73), in said recording medium (2),
public-key acquisition means (72) for acquiring said public key (6) stored in said second key recording medium (4) or said recording medium (2),
common-key encryption means (73) for encrypting said common key (7) with said public key (6), and
common-key storage means (72) for storing said common key (8), encrypted by said common-key encryption means (73), in said recording medium (2).

2. An information processing apparatus **characterized by** comprising:
key generation means (52) for generating a set of a private key (5) and a public key (6);
private-key storage means (55) for storing said private key (5) in a first key recording medium (4);
public-key storage means (55) for storing said public key (6) in a second key recording medium (4) or a recording medium (2);
private-key acquisition means (53) for acquiring said private key (5) to be stored in said first key recording medium (4);
common-key decryption means (54) for decrypting an encrypted common key (8) with said private key (5); and
electronic-file decryption means (54) for decrypting an encrypted electronic file with said common key (7) decrypted by said common-key decryption means (54).

3. The information processing apparatus according to claim 2, **characterized by** further comprising:
an electronic-file information storage section (441) for storing information indicating a confidential level of an electronic file; and
pattern determination means (51) for selecting one procedure from predetermined plural key generating procedures based on information to be stored in said electronic-file information storing section (441), and
**characterized in that** said public-key storage means (55) stores said public key (6), generated by said key generation means (52), in said second key recording medium (4) or said recording medium (2) based on said one procedure selected by said pattern determination means (51).

4. The information processing apparatus according to claim 3, **characterized by** further comprising:
an electronic-file-storer information storage section (442) for storing information on a user who receives said recording medium (2); and
pattern determination means (51) for selecting one procedure from predetermined plural key generating procedures based on information to be stored in said electronic-file-storer information storage section (442), and
**characterized in that** said public-key storage means (55) stores said public key, generated by said key generation means (52), in said second key recording medium (4) or said recording medium (2) based on said one procedure selected by said pattern determination means (51).

5. The information processing apparatus according to claim 4, **characterized in that** said electronic-file encryption means (54) determines from which one of said second key recording medium (4) and said recording medium (2) an encrypted common key (8) is to be acquired, and acquires said encrypted common key (8) from said second key recording medium (4) or said recording medium (2) based on a result of determination.

6. The information processing apparatus according to claim 4, **characterized in that** said key generation means (52) extracts information unique to said recording medium (2), and generates a set of a private key (5) and a public key (6) based on said unique information.

7. The information processing apparatus according to claim 4, **characterized in that** said key generation means (52) generates a set of a private key (5) and a public key (6) based on information on said user who receives said recording medium (2) or a date.

8. An information processing apparatus **characterized by** comprising:
common-key generation means (71) for generating a common key (7);
electronic-file encryption means (73) for encrypting said electronic file with said common key (7);
electronic-file storage means (74) for storing said electronic file, encrypted by said electronic-file encryption means (73), in a recording medium (2);
public-key acquisition means (72) for acquiring said public key (6) stored in a second key recording medium (4) or said recording medium (2);
common-key encryption means (73) for encrypting a common key (7), which is used in encryption in said electronic-file encryption means (73), with said public key (6); and
common-key storage means (72) for storing said common key (8), encrypted by said common-key encryption means (73), in said recording medium (2).

9. The information processing apparatus according to claim 8, **characterized by** further comprising:
pattern determination means (75) for determining which procedure in predetermined plural key generating procedures is used, and
wherein said public-key acquisition means (72) acquires a public key (6) according to a predetermined procedure determined by said pattern determination means (75), and
said common-key generation means (71) generates a common key (7) according to said predetermined procedure determined by said pattern determination means (75).

10. The information processing apparatus according to claim 8, **characterized in that** said common-key storage means (72) determines in which one of said second key recording medium (4) and said recording medium (2) said common key (7) generated by said common-key generation means (71) is to be stored, and stores said common key (7) in said second key recording medium (4) or said recording medium (2) based on a result of determination.

11. The information processing apparatus according to claim 8, **characterized in that** said common-key generation means (71) extracts information unique to said recording medium (2), and generates a common key (7) based on said unique information.

12. An information processing method **characterized by** comprising:
a key generation step (52) of generating a set of a private key (5) and a public key (6);
a private-key storage step (55) of storing said private key (5) in a first key recording medium (4);
a public-key storage step (55) of storing said public key (6) in a second key recording medium (4) or a recording medium (2);
a private-key acquisition step (53) of acquiring said private key (5) to be stored in said first key recording medium (4);
a common-key decryption step (54) of decrypting an encrypted common key (8) with said private key (5); and
an electronic-file decryption step (54) of decrypting an encrypted electronic file with said common key (7) decrypted at said common-key decryption step (54).

13. An information processing method **characterized by** comprising:
a common-key generation step (71) of generating a common key (7);
an electronic-file encryption step (73) of encrypting said electronic file with said common key (7);
an electronic-file storage step (74) of storing said electronic file, encrypted at said electronic-file encryption step (73), in a recording medium (2);
a public-key acquisition step (72) of acquiring said public key (6) stored in a second key recording medium (4) or said recording medium (2);
a common-key encryption step (73) of encrypting a common key (7), which is used in encryption at said electronic-file encryption step (73), with said public key (6); and
a common-key storage step (72) of storing said common key (8), encrypted at said common-key encryption step (72), in said recording medium (2).

14. A computer readable recording medium (2) having:
a writable area (22) for storing an electronic file; and
a read-only area (21) where a program for generating a private key (5), a public key (6) and a common key (7) is stored,
said program **characterized by** allowing a computer to function as:
key generation means (52) for generating a set of a private key (5) and a public key (6);
private-key storage means (55) for storing said private key (5) in a first key recording medium (4);
public-key storage means (55) for storing said public key (6) in a second key recording medium (4) or a recording medium (2);
private-key acquisition means (53) for acquiring said private key (5) to be stored in said first key recording medium (4);
common-key decryption means (54) for decrypting an encrypted common key (8) with said private key (5) acquired by said private-key acquisition means (53);
electronic-file decryption means (54) for decrypting an encrypted electronic file with said common key (7) decrypted by said common-key decryption means (54);
common-key generation means (71) for generating a common key (7);
electronic-file encryption means (73) for encrypting said electronic file with said common key (7);
electronic-file storage means (74) for storing said electronic file, encrypted by said electronic-file encryption means (73), in a recording medium (2);
public-key acquisition means (72) for acquiring said public key (6) stored in a second key recording medium (4) or said recording medium (2);
common-key encryption means (73) for encrypting a common key (7), which is used in encryption in said electronic-file encryption means (73), with said public key (6) acquired by public-key acquisition means (72); and
common-key storage means (72) for storing said common key (8), encrypted by said common-key encryption means (72), in said recording medium (2).

15. A program **characterized by** allowing a computer to function as:
key generation means (52) for generating a set of a private key (5) and a public key (6);
private-key storage means (55) for storing said private key (5) in a first key recording medium (4);
public-key storage means (55) for storing said public key (6) in a second key recording medium (4) or a recording medium (2);
private-key acquisition means (53) for acquiring said private key (5) to be stored in said first key recording medium (4);
common-key decryption means (54) for decrypting an encrypted common key (8) with said private key (5);
electronic-file decryption means (54) for decrypting an encrypted electronic file with said common key (7) decrypted by said common-key decryption means (54);
common-key generation means (71) for generating a common key (7);
electronic-file encryption means (73) for encrypting an electronic file, Which should keep confidentiality, with said common key (7);
electronic-file storage means (74) for storing said electronic file, encrypted by said electronic-file encryption means (73), in a recording medium (2);
public-key acquisition means (72) for acquiring said public key (6) stored in a second key recording medium (4) or said recording medium (2);
common-key encryption means (73) for encrypting a common key (7), which is used in encryption in said electronic-file encryption means (73), with said public key (6) acquired by said public-key acquisition means (72); and
common-key storage means (72) for storing said common key (8), encrypted by said common-key encryption means (72), in said recording medium (2).
